# EUROPEAN PATENT SPECIFICATION

(11) **EP 2 873 713 B1**
(45) Date of publication and mention of the grant of the patent: **01.07.2020**
(21) Application number: 14193180.8
(22) Date of filing: 14.11.2014
(51) Int. Cl.: C10B 57/06, C10G 9/00, B01J 27/16, B01J 27/182, C10B 55/00

(54) **Process for preparation of an additive composition and process for reduction of coke yield in delayed coking process**
Verfahren zur Herstellung einer Additivzusammensetzung sowie Verfahren zur Reduzierung der Koksausbeute in verzögertem Verkokungsverfahren
Procédé de préparation d'une composition d'additif et procédé pour la réduction de rendement en coke dans un procédé de cokéfaction retardée

(30) Priority: 14.11.2013 IN 3228MU2013; 31.03.2014 IN 1225MU2014
(43) Date of publication of application: 20.05.2015
(73) Proprietor: Indian Oil Corporation Ltd., 400 051 Mumbai (IN)
(72) Inventor: Prasad, Terapalli Hari Venkata Devi, 121 007 Faridabad (IN); Pradeep, Ponoly Ramachandran, 121 007 Faridabad (IN); Das, Satyen Kumar, 121 007 Faridabad (IN); Dixit, Jagdev Kumar, 121 007 Faridabad (IN); Rajesh, 121 007 Faridabad (IN); Om Parkash, 121 007 Faridabad (IN); Hait, Samik Kumar, 121 007 Faridabad (IN); Dalai, Eswar Prasad, 121 007 Faridabad (IN); Thakur, Ram Mohan, 121 007 Faridabad (IN); Thapa, Gautam, 121 007 Faridabad (IN); Bhattacharyya, Debasis, 121 007 Faridabad (IN); Kumar, Brijesh, 121 007 Faridabad (IN); Das, Biswapriya, 121 007 Faridabad (IN); Rajagopal, Santanam, 121 007 Faridabad (IN); Malhorta, Ravinder Kumar, 121 007 Faridabad (IN)
(74) Representative: Høiberg P/S

(56) References cited:
- WO-A1-97/12011
- WO-A1-2004/104139
- US-A- 4 758 544
- US-A- 4 832 823
- US-A- 5 849 852

## Description

### FIELD OF INVENTION

The present invention relates to a process for the preparation of an additive composition and a process for reduction of coke yield in Delayed Coking process. Further, the present invention also relates to a process of thermal cracking of heavy petroleum residue used in petroleum refineries using Delayed Coking process to produce petroleum coke and lighter hydrocarbon products with decreased coke yield and increased yield of liquid and/or gaseous products.

### BACKGROUND OF THE INVENTION

In the Delayed Coking process used in the petroleum refineries there are three varieties of cokes that are generated namely, Fuel grade coke, Anode grade coke and Needle coke. Fuel grade coke is used as fuel in furnaces etc., as the name suggests and it has the lowest cost per unit weight. Other two grades of coke fetch higher value than fuel grade coke, wherein Needle coke being the highest value product among the two and refiners may look into production of needle coke as an opportunity for revenue generation. The excess volume of low value petroleum coke generated in Delayed Coking unit poses the refiners with the perennial problem of coke handling, storage, removal and marketing. Also, the feed through put to the Delayed Coking unit is limited by the bed height of the coke generated inside the coking drum, by having to divert the feed from one coke drum to another empty drum. Therefore, it is desirable to have a process/material means to reduce the height of coke bed generated inside the coke drum, which will enable higher amounts of feed to be processed inside the coke drum.

Manipulating the process parameters like employing low recycle ratio, low coke drum pressure during operation etc. can reduce the coke yield as known by those who are well versed with art of Delayed Coking. Various additives have been tried in the past for reducing the yield of coke in Delayed Coking process.

US Patent no. 4378288 have disclosed the use of free radical inhibitors like benzaldehyde, nitrobenzene, aldol, sodium nitrate etc. with a dosage of 0.005-10.0 wt% of the feedstock which majorly have been Vacuum tower bottom, Reduced crude, Thermal tar or a blend thereof. Additives used included only liquid phase additives.

Chevron Research Company in their US Patent no. 4394250 have disclosed use of additives such as cracking catalysts like Silica, alumina, bauxite, silica-alumina, zeolites, acid treated natural clays, Hydrocracking catalysts such as metal oxides or sulfides of groups VI, VII or VIII and Spent catalyst from FCC in presence of Hydrogen at a dosage of 0.1-3 wt% of the feedstock Hydrogen flow 50-500 SCF (79-789 Nm³) per Kg/cm² (g) where the additive is contacted with the feedstock before its entry into the coke drum. Hydrocarbon feedstock used in Delayed Coking have been shale oil, coal tar, reduced crude, residuum from thermal or catalytic cracking processes, hydrotreated feedstocks, etc.

Similarly, US patent publication No. 2009/0209799 discloses FCC catalysts, zeolites, alumina, silica, activated carbon, crushed coke, calcium compounds, Iron compounds, FCC Ecat, FCC spent cat, seeding agents, hydrocracker catalysts with a dosage of < 15 wt% of the feed which is majorly a suitable Hydrocarbon feedstock used in Delayed Coking of boiling point higher than 565 °C to obtain a reduction in coke yield of about 5 wt%. A number of liquid and solid phase additives have been described for achieving objectives like reduction of coke yield on hydrocarbons feedstocks, suitable for processing in Delayed Coker unit, subjected to Standard Delayed Coker operating conditions in the known art. Range of the temperature studied is about 400-650°C. Reaction pressure considered 1 atm to 14 atm. Various methods for contacting hydrocarbon feedstock and additives like mixing with feed, injecting from coke drum top etc. have also been described. In some recent patents (US 2009/0209799), injection of additives into coker drum has been claimed as superior as compared to mixing with feed.

Most of the patents have disclosed the use catalysts in liquid and solid phase, broadly falling in the categories of free radical inhibitors, free radical removers, free radical accelerators, stabilizers and cracking catalysts. Reported additive injection was in the range of 0.005 to 15 wt% of the feed.

US 8,361,310 B2 depicts injection of an additive package comprising catalysts, seeding agents, excess reactants, quenching agents and carrier fluids into the top of the coke drum, for various utilities like coke yield reduction.

US 2011/0005968 discloses anionic clay mixed with the hydrocarbon feedstock for reducing the coke yield.

US 4 758 544 A discloses a catalyst composition comprising an alumina-aluminum phosphate-silica support bearing a halogen, a Group VI metal and a Group VIII metal in which the support has an average pore radius of from about 10 Å to about 300 Å, a surface area ranging from about 50 m2 /g to about 400 m2 /g and a pore volume of about 0.1 to about 1.5 cc/g. The catalyst composition is used for hydroprocessing oils and possesses significant hydrodenitrification activity.

US 5 849 852 A discloses a support for catalysts, containing at least two constituents chosen from silica, alumina and aluminium phosphate. Process for the manufacture of such a support, according to which an alcohol, water, a silicon alkoxide and an acid are mixed under conditions such that gelling or precipitation of silica is prevented, an acidic solution of an aluminium compound and/or a solution of a source of phosphate ions are added thereto, a gelling agent is added thereto, a gel is recovered which is washed with water and then by means of an organic liquid, the gel is then dried until a powder is obtained, and the powder is calcined. Polymerization of olefins in the presence of a catalyst containing chromium on a support as described above.

WO 97/12011 A1 relates to processes for making and using bottoms cracking catalysts that are particularly characterized by the fact that they contain an aluminosilicate compound wherein a SiO2 component is chemically reacted with an alumina component before the resulting aluminosilicate compound is mixed with the other ingredients employed in a slurry formulation used to make the BCA.

US 4 832 823 A relates to an improved coking process is described wherein a feedstock comprising residual oil is passed into a coking zone along with a highly aromatic oil such as pyrolysis tars or a decanted oil produced from a fluidized catalytic cracking zone in a concentration resulting in the feedstock having from about 5 to about 20 percent by weight of highly aromatic oil. The yield of coke is thereby reduced.

WO 2004/104139 A1 relates to a delayed coking process for making substantially free-flowing coke, preferably shot coke. A coker feedstock, such as a vacuum residuum, is heated in a heating zone to coking temperatures then conducted to a coking zone wherein volatiles are collected overhead and coke is formed. A metals-containing, or metals-free additive is added to the feedstock prior to it being heated in the heating zone, prior to its being conducted to the coking zone, or both.

### SUMMARY OF THE INVENTION

It is an objective of the present invention to provide means for reduction of coke yield in a Delayed Coking process.

In a primary aspect of the present invention, there is provided a process for the preparation of an additive composition as defined in claims 1-3. The additive composition comprises: (i) 40-85 wt% alumina, (ii) 5 -20 wt% colloidal silica having silica content ranging from 20-45 wt%, and (iii) 0.1-13 wt% phosphate compound, wherein said alumina comprises boehmite alumina and 2-40 wt% dispersible alumina. In preferred embodiment, the dispersible alumina has crystallite size ranging from 4.5 to 40 nano meters.

In another embodiment, the present invention provides a process for reducing coke yield in Delayed Coking process as defined in claims 4-14.

In another embodiment, the phosphate compound in the additive is selected from a group comprising phosphoric acid, monobasic phosphate compounds, dibasic phosphate compounds, tri basic phosphate compounds, diammonium hydrogen ortho phosphate and combinations thereof.

The dispersible alumina in the additive composition is selected from the group comprising pseudo boehmite, gamma-alumina, alpha alumina, such as Pural 200, Pural 400 and Disperal 40, and combination thereof. In a preferred embodiment, the dispersible alumina has crystallite size ranging from 4.5-40 nm.

In one embodiment, in the process for preparing a thermal cracking additive composition of the present invention, the mineral or organic acid is selected from nitric acid, formic acid, and acetic acid.

In one embodiment, in the process for reducing coke yield in Delayed Coking process of the present invention, the contacting of feedstock with the additive is carried out by feeding a predetermined quantity of the additive to the coke drum before feeding the hydrocarbon feedstock into the coke drum. In another embodiment, the step of contacting the feedstock with the additive is carried out by mixing the additive at a predetermined flow rate into the hydrocarbon feedstock before entering the feed heater furnace, in the transfer line. In yet another embodiment, the step of contacting the feedstock with the additive is carried out by injecting the solid phase additive into the coke drum during the feeding of hydrocarbon into the drum, through injection nozzle(s) located at suitable part of the drum, preferably at the top section. The above said steps for contacting the feedstock with the additive composition can also be carried out in multiple combinations.

In a preferred embodiment, the step of contacting a feedstock with the thermal cracking additive composition of the present invention is performed at a temperature range of 450-600°C. In another preferred embodiment, the step of contacting a feedstock with the thermal cracking additive composition prepared according to the present invention is performed at a pressure range of 0.5-5 kg/cm².

In yet another preferred embodiment, in the process for reducing coke yield in Delayed Coking process of the present invention, the micron-sized thermal cracking additive composition is used in the concentration range of 0.01-5 wt% of the feedstock. In another preferred embodiment, in the process for reducing coke yield in Delayed Coking process of the present invention, the nano-sized thermal cracking additive composition is used in the concentration range of 50 ppm to 40,000 ppm of the feedstock.

In yet another embodiment, the micron sized thermal cracking additive is used in solid form or in a dispersion form in the process for reducing coke yield in Delayed Coking process of the present invention.

In another embodiment, the nano-sized thermal cracking additive is used in dispersion form in the process for reducing coke yield in Delayed Coking process of the present invention.

In a preferred embodiment, the micron-sized thermal cracking additive composition or the nano-sized thermal cracking additive composition in dispersion form is used in combination with a liquid dispersion medium selected from the group consisting of feedstock, gas oil, lighter hydrocarbons, residue, solvents, water or mixtures thereof.

In a preferred aspect, the bottom product boiling above 350+°C yield is reduced by 1-3 wt% in the process for reducing coke yield in Delayed Coking process of the present invention.

In another preferred aspect, the LPG yield is increased by 1-2 wt% in the process for reducing coke yield in Delayed Coking process of the present invention.

In another preferred aspect, the naphtha (C5-150°C) yield is increased by 1-2 wt% in the process for reducing coke yield in Delayed Coking process of the present invention.

In yet another preferred aspect, in the use according to the present invention, the reduction in coke yield is 1 wt% to 5_wt% with respect to base case.

### BRIEF DESCRIPTION OF THE DRAWINGS

Fig. 1 shows schematic diagram of a conventional Delayed Coking process.

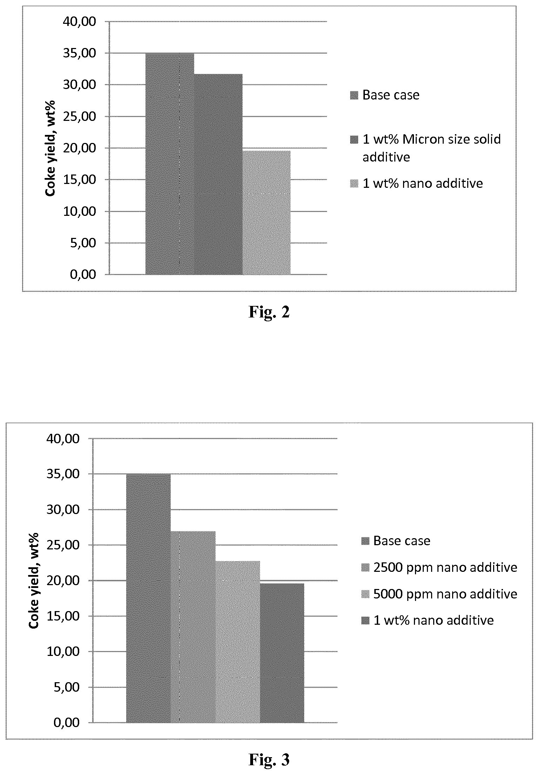

Fig. 2 shows reduction of coke yield using micron sized solid thermal cracking additive and nano sized solid thermal cracking additive.
Fig. 3 shows reduction of coke yield using different concentrations of nano-sized solid thermal cracking additive.

### DETAILED DESCRIPTION OF THE INVENTION

While the invention is susceptible to various modifications and alternative forms, specific embodiment thereof will be described in detail below. It should be understood, however that the scope of the invention is defined by the appended claims.

One of the major concerns in a Delayed Coking process is to address the problem of production of coke and the associated disadvantages. There have been many efforts to reduce the production of coke in a Delayed Coking process. The present invention is providing a process for preparing a thermal cracking additive composition for use in a Delayed Coking process, whereby the use of such prepared thermal cracking additive composition reduces the yield of coke. The present description also provides the novel thermal cracking additive compositions in micron-sized and nano-sized compositions. The novel thermal cracking additive compositions prepared herein do not settle in the bottom when mixed with liquid hydrocarbons and thereby provide processing advantages due to their smaller particle size. It is also contemplated that the present invention may prove useful in addressing other problems also in a number of technical areas.

Accordingly, the present description provides a thermal cracking additive composition for reduction of coke yield in a Delayed Coking process. The additive composition comprises:
(i) 40-85 wt% alumina,
(ii) 5-20 wt% colloidal silica having silica content ranging from 20-45 wt%, and
(iii) 0.1-13 wt% phosphate compound, wherein said alumina comprises boehmite alumina and 2-40 wt% dispersible alumina. The dispersible alumina has crystallite size ranging from 4.5 to 40 nano meters.

The said thermal cracking additive composition is preferably in micron-size with average d₅₀ particle size in the range of 5-150 microns. More preferably, the said thermal cracking additive composition is in nano-size with volume average d₅₀ diameter of 20 to 1000 nanometers.

As used herein, the term "alumina" refers to alumina comprising boehmite alumina and 2-40 wt% dispersible alumina. The dispersible alumina has crystallite size ranging from 4.5 to 40 nano meters.

The "boehmite alumina" or "boehmite" is an aluminum oxide hydroxide (γ-AlO(OH) mineral which is used as a binder in catalyst preparation with Al₂O₃ content of around 64-80 wt%.

The term "dispersible alumina" or "large pore dispersible alumina" refers to dispersible alumina having large pore size ranging from 30-400 Å. Dispersible alumina is selected from the group comprising pseudo boehmite, gamma-alumina, alpha alumina, and combination thereof, such as Pural 200, Pural 400 and Disperal 40. The dispersible alumina has crystallite size ranging from 4.5-40 nm.

As used herein, the term "colloidal silica" refers to suspensions of fine amorphous, nonporous, and typically spherical silica particles in a liquid dispersed phase. Colloidal silica is most often prepared by partial neutralization of alkali-silicate solution to form silica nuclei of particle size ranging from 100-400 nanometers.

As used herein, the term "phosphate" or PO₄ refers to a phosphate compound selected from the group comprising phosphoric acid, monobasic phosphate compounds, dibasic phosphate compounds, tri basic phosphate compounds, diammonium hydrogen ortho phosphate and combination thereof.

Without being bound by theory, the inventors believe that, with increasing alumina concentration along with silica, catalytic function of the catalyst increases. At 100% alumina concentration, catalytic function drastically decreases. PO₄ is used for binding material along with silica. Mainly, it improves the catalyst physical properties here and also contributes in retaining the catalytic function. After certain concentration of PO₄, binding properties decrease. However, to get optimum coke reduction in the present invention, the acidity of the catalyst is optimized.

The present invention provides a process for preparing the thermal cracking additive composition for reduction of coke yield and a process for reducing coke yield in a Delayed Coking process. The present description also provides that the thermal cracking additive composition is in micron-size and/or nano-size.

### Micron-sized additive composition

In one embodiment the present invention discloses an improved Delayed Coking process in which the hydrocarbon feedstock is heated to the thermal cracking temperature and is introduced into the coke drum kept at desired pressure, until it cracks into lighter products. The improvement comprises adding an additive of the present invention inside the coke drum to mix with the hot hydrocarbon feedstock in amounts sufficient to cause a reduction in coke yield and increase in liquid yield, in particular the naphtha yield.

The liquid hydrocarbon feedstock to be used in the process can be selected from a group comprising of, but not limited to heavy hydrocarbon feedstocks like vacuum residue, atmospheric residue, deasphalted oil, shale oil, coal tar, clarified oil, residual oils, thermal pyrolytic tar, visbreaker streams, slop oil or blends of such hydrocarbons. The Conradson carbon residue content of the feedstock can be above 6 wt% and density can be minimum of 0.9 g/cc. These hydrocarbon feedstock may be hydrotreated for removal of sulfur and metals before feeding into the process, depending on the requirement. Major aspect of the disclosed invention provides additive composition of the present invention for contacting the hydrocarbon feedstock having feed CCR greater than 6 wt% at thermal cracking conditions which enables enhanced quantity of hydrocarbon feed to be processed and also to decrease the coke yield and increase the liquid and gas product yield.

The micron-sized thermal cracking additive composition comprises: (i) 40-85 wt% alumina, (ii) 5 -20 wt% colloidal silica having silica content ranging from 20-45 wt%, and (iii) 0.1-13 wt% phosphate compound, wherein said alumina comprises boehmite alumina and 2-40 wt% dispersible alumina. The dispersible alumina has crystallite size ranging from 4.5 to 40 nano meters. The concentration of the additive composition contacting with the feedstock can vary from 0.01 to 5 wt% of the feedstock. The average d₅₀ particle size of the said additive composition can range from 5 microns to 150 microns with the maximum size being decided based on the settling characteristics of the additive particulates in the hydrocarbon liquid.

The additive may be in suitable form, such as a solid powder, slurry, suspension and/or the like. The additives may be added in isolation or along with a carrier fluid. The non limiting examples of the carrier fluid are hydrocarbon liquids of suitable boiling range which may include the feedstock, gas oil, lighter hydrocarbons, residue, solvents, water, steam, nitrogen, inert gases, carbon monoxide, carbon dioxide and/or the like. The solid phase additives may contain acid sites which help to accelerate the cracking reaction rate.

The process of the present invention may use any desired operating temperature ranging from 450 to 600 °C, and desired operating pressure inside coke drum ranging from 0.5 to 5 Kg/cm². The use of additives according to the present invention alter the physical properties of the coke produced like increasing the bed density of the coke deposited inside the coke drum, thereby effectively reducing the coke bed height enabling a higher through put of hydrocarbon feedstock into the coke drum. The use of the additive composition according to the present invention enables the refiner to process higher quantity of hydrocarbon feed and also causes reduction in the coke yield and increase in the liquid product yield, especially of naphtha, at the expense of coker fuel oil.

### Nano-sized additive Composition

In another embodiment the present invention discloses a process for thermal cracking of petroleum residue, converting the petroleum residue into liquid and gaseous product streams and solid, carbonaceous petroleum coke as a by-product, using the nano-sized additive composition described herein. Particularly the invention discloses an improved process for thermal cracking of petroleum residue by delayed coking using a nano-sized thermal cracking additive compsotion. The nano-sized thermal cracking additive composition comprises: (i) 40-85 wt% alumina, (ii) 5 -20 wt% colloidal silica having silica content ranging from 20-45 wt%, and (iii) 0.1-13 wt% phosphate compound, wherein said alumina comprises boehmite alumina and 2-40 wt% dispersible alumina. The dispersible alumina has crystallite size ranging from 4.5 to 40 nano meters and the volume average d₅₀ diameter of the additive composition is 20 to 1000 nanometers. The said nano-sized additive composition is used in combination with a liquid dispersion medium.

An aspect of the process according to the invention discloses the composition of a nano-sized solid phase additive for delayed coking of petroleum residue with increased product yield and decreased coke yield.

Another aspect of the present invention discloses thermal cracking of hydrocarbon feedstocks; with Conradson carbon residue content of the feedstock being preferably above 6 wt% and minimum density of 0.9 g/cc, using a nano-sized solid phase additive.

The petroleum residue used according to the present invention includes, but is not necessarily limited to, vacuum residue, atmospheric residue, deasphalted oil, shale oil, coal tar, clarified oil, residual oils, thermal pyrolytic tar, visbreaker streams, heavy waxy distillates, foots oil, slop oil or blends of such hydrocarbons. The petroleum residue used according to the present invention may be hydrotreated for removal of sulfur and metals before feeding into the process, depending on the requirement.

The nano-sized solid phase additive used according to the present invention is predominantly in amorphous form, having a volume average d₅₀ diameter of 20 to 1000 nanometers, preferably in the range 100 to 500 nanometer and external specific surface area greater than 0.1 m²/g, measured in dispersed condition. Additionally a binder may be used in accordance to the present invention, which may include clay, silica etc.

The nano-sized additives for use in this invention include, but are not necessarily limited to, large pore size active materials of silica, alumina, peptized alumina, aluminium silicates, titanium oxide or mixtures thereof. The phosphate compound used according to the present invention includes, but is not necessarily limited to, phosphoric acid, monobasic phosphate compounds, dibasic phosphate compounds, tri basic phosphate compounds, diammonium hydrogen ortho phosphate and combination thereof. The nano-sized additive can contain phosphate compound up to 13 wt%. The liquid dispersion medium for the additive can be selected from hydrocarbon liquids of suitable boiling range. Some non-limiting examples of dispersion medium include the feedstock, gas oil, lighter hydrocarbons, residue, solvents, water or mixtures thereof.

Nano-sized additive is prepared from micron-sized particles of desired composition using size reduction approach. Examples of size reduction approaches are wet grinding in stirred media mill, planetary ball mill etc. Micro size particles of the additive composition are made in slurry form in water and loaded to the milling chamber of the stirred media mill and milled till the particles are of nanometer size as desired. Dispersants or stabilizing agents can be added to the slurry for keeping nano particles in suspension.

The concentration of the nano sized additive contacting with the feedstock can vary from 50 to 40000 ppm. The nano sized additive may additionally contain acid sites which help to accelerate the cracking reaction rate.

### Method of reducing coke yield in Delayed Coking process using the additive compositions prepared according to the present invention

The process for reducing coke yield in Delayed Coking process comprises the steps of:
preparing an additive composition comprising 40-85 wt% alumina, 5-20 wt % colloidal silica having silica content ranging from 20-45 wt%, and 0.1-13 wt % phosphate compound wherein said alumina comprises boehmite alumina and 2-40 wt% dispersible alumina by
(a) treating boehmite alumina with demineralized water to obtain boehmite slurry;
(b) treating boehmite slurry with phosphate compound to obtain phosphate treated boehmite slurry;
(c) gelling dispersible alumina employing mineral or organic acid, wherein the dispersible alumina is selected from the group comprising pseudo boehmite, gamma-alumina, alpha alumina, and combination thereof;
(d) adding colloidal silica to product of step (c) at pH 1 to 5;
(e) adding the phosphate treated boehmite slurry to the product of step (d);
(f) spray drying the product obtained in step (e);
(g) calcining the spray dried particles of step (f) to obtain the additive composition,
   (i) contacting a feedstock with said additive in a coke drum; and
   (ii) separating the cracked product to obtain different fractions.

The contacting of the additive composition with the feedstock can be achieved in three ways, (a) by feeding a predetermined quantity of the additive to the coke drum before feeding the hydrocarbon feedstock into the coke drum; (b) by mixing the additive at a predetermined flow rate into the hydrocarbon feedstock before entering the feed heater furnace, in the transfer line; or c) injecting the additive into the coke drum during the feeding of hydrocarbon into the drum, through injection nozzle(s) located at suitable part of the drum, preferably at the top section. Also, a combination of these contacting methods can be used. The additive particles are to be selected in such a way so as to minimize the settling of the same in the hydrocarbon liquids being processed. In case of supplying solid additive into the coke drum at the time of feeding of hydrocarbon feedstock, a single or multiple injection nozzles located at any suitable location in the coke drum is used for additive supply. The elevation & orientation of the injection nozzle is selected so as to minimize the entrainment of the solid additive to the coke drum overhead vapor line. In case of supply of additive to the hydrocarbon feedstock, the size and shape of the additive particles are to be controlled to minimize any erosion that may occur in the pipe lines.

Contacting of the nano sized additive in liquid dispersed form, with the feedstock is achieved by mixing the additive at a predetermined flow rate into the hydrocarbon feedstock before entering the feed heater furnace, in the transfer line or in the feed surge drum or storage tank. The size and shape of the additive particles are to be controlled to minimize any erosion that may occur in the pipe lines. The feed is then thermally treated at a temperature, pressure and residence time sufficient to form a lower boiling fraction, a higher boiling fraction and the solid particles of coke. The process of the present invention may use any desired operating temperature ranging from 450 to 600 °C, and desired operating pressure inside coke drum ranging from 0.5 to 5 Kg/cm². The use of the micron-sized or nano sized additive causes a reduction in the coke yield and increase in the hydrocarbon product yield. The coke thus formed is separated from the valuable liquid and/or gaseous hydrocarbon product yields.

The following examples are not according to the presently claimed invention but are useful for understanding the present invention.

### Examples for Micron-sized additive Composition

### Example 1

Experiments were carried out in small scale Micro coker unit using solid additives of different compositions as indicated in Table 1. The Micro coker unit consists of a reactor unit kept in an Electric furnace for heating the feed to the reaction temperature, condenser vessel for collection of liquid products and a gas flow meter. Feed premixed with additive is loaded into the reactor vessel and is pressurized with nitrogen gas to desired pressure of 1 Kg/cm². Heating is carried out using the electric furnace at a controlled rate through Proportional Integral Derivative Controller (PID controller). Reactor is held at the reaction temperature of 486°C for two hours for completion of thermal cracking reactions. Reactor pressure is kept constant by using a needle valve provided in the gas outlet. Liquid products are condensed and collected in the condenser vessel and gaseous products are measured in a gas flow meter and then vented to atmosphere. The experimental results are shown in Table-2.

**Table 1: Micron sized solid additives of different Compositions**

| **Compositions** | **wt% of Alumina** | **wt% of Phosphate** | **wt% of Silica** |
|---|---|---|---|
| Additive 'A' | 30 wt% | 0.1 wt% | 69.9 wt% |
| Additive 'B' | 68 wt% | 10 wt% | 22 wt% |
| Additive 'C' | 85 wt% | 15 wt% | - |
| Additive 'D' | 68 wt% | - | 32 wt% |
| Additive 'E' | 68 wt% | 20 wt% | 12 wt% |

**Table 2: Results of experiments carried out in Micro coker unit using Micron sized additive Compositions**

| **Experiment** | **Coke yield, wt%** | **Liquid yield, wt%** | **Gas yield, wt%** | **ΔCoke yield w.r.t. Base case, %** |
|---|---|---|---|---|
| Vacuum Residue without additive | 35.21 | 50.04 | 14.75 | 0.00 |
| Vacuum Residue + 1 wt% Additive 'A' | 35.15 | 50.0 | 14.9 | -0.17 |
| Vacuum Residue + 1 wt% Additive 'B' | 26.5 | 44.0 | 29.5 | -24.74 |
| Vacuum Residue + 1 wt% Additive 'C' | 35.18 | 50.06 | 14.76 | -0.085 |
| Vacuum Residue + 1 wt% Additive 'D' | 28.2 | 51.8 | 20.0 | -19.91 |
| Vacuum Residue + 1 wt% Additive 'E' | 30.2 | 46.6 | 23.2 | -14.23 |
| Vacuum Residue + 0.005 wt% Additive 'B' | 35.21 | 50.0 | 14.8 | 0.00 |

### Example 2

Two experiments were performed in a Delayed Coker pilot plant using vacuum residue feedstock (VR), one without using any additive and a second experiment using the solid phase Additive 'B'. The Additive 'B' is selected for pilot plant experiments based on the data indicated in table 2 (based on reduced coke yield). Delayed coking pilot plant has a coke drum in which the hot hydrocarbon feed preheated inside a furnace, is supplied from the bottom. Facility is provided to inject water to the feed preheat furnace at controlled rate.

Properties of feedstock used in this example are given in Table-3.

**Table 3: Properties of feedstock**

| **Feed Properties** | **Unit** | **Value** |
|---|---|---|
| CCR | Wt% | 22.05 |
| Asphaltene | Wt% | 7.1 |
| Sulfur | Wt% | 5.18 |
| Na | ppm | 4 |
| Mg | ppm | 1 |
| Ni | ppm | 91 |
| V | ppm | 146 |
| Fe | ppm | 10 |
| Paraffins | Wt% | 43.5 |
| Aromatics | Wt% | 56.5 |
| ASTM D 2887 Distillation, IBP/30/50/90/EP | Vol% / °C | 514/590/608/642/652 |

The reaction conditions of the experiment conducted in Delayed Coker pilot plant are given in Table-4.

**Table-4: Reaction conditions**

| **Reference no.** | **Run No. 1 (VR without additive)** | **Run No. 2 (VR with additive)** |
|---|---|---|
| Additive dosing (Wt% of feed) | 0 | 1 |
| Water rate (% of total feed) | 1.2 | 1.2 |
| COT (°C) | 495 | 495 |
| Drum bottom temperature (°C) | 486 | 486 |
| Coke drum pressure (kg/cm²) | 1.05 | 1.05 |
| Feed rate (Kg/hr) | 8 | 8 |
| Feeding time (hr) | 12 | 12 |

The operating conditions for both the experiments were: 495°C feed furnace outlet line temperature, 1.05 Kg/cm² coke drum pressure, 1.2 wt% steam addition to the coker feed and a feed rate maintained at about 8 kg/h. The Delayed Coking pilot plant unit was operated on 16 hr cycle time, of which 12 hrs of the cycle consisted of feeding the unit with resid feed and 4 hrs of the cycle consisted of stripping and quenching.

1 wt% (corresponding to the total feed to be processed) of the solid phase additive was fed to the coke drum before the beginning of the hydrocarbon feed flow into the coke drum. After supplying the additive to the drum, the hydrocarbon feedstock supply into the drum was started and the solid phase additive and feed were allowed to mix inside the coke drum, facilitating the cracking reaction.

The particles of additive material used had an average sphericity of 0.95 and the particle size and density was selected so as to prevent the settling of the same in the coke drum bottom. The vapors emerging from the coking drums were fed into a fractionator and recovered as liquid and gas products in product collection vessels. No coker product was recycled to the coker drum. One repeat run was conducted to confirm the yield data obtained with the use of solid phase additives.

The product yields and result obtained from the pilot plant experiments are given in Table-5.

**Table - 5: Results of Pilot plant experiment with Micron sized Additive 'B' (1 wt%)**

| | **VR without solid phase additive** | **VR with solid phase additive 'B'** | **Δ _{Change with} respect to base case, %** |
|---|---|---|---|
| Coke bed height, m | 1 | 0.7 | -30 % |

| **Yield (Basis: fresh feed)** | | | |
|---|---|---|---|
| H₂+C₁+C₂ (Dry gas) (wt%) | 3.47 | 5.22 | + 50 % |
| LPG (wt%) | 3.00 | 4.25 | + 41.6 % |
| C₅-150 (Naphtha) (wt%) | 6.09 | 8.15 | + 33.8 % |
| 150-350 (Gas Oil) (wt%) | 27.21 | 29.20 | + 7.3 % |
| 350+ (Fuel Oil) (wt%) | 34.48 | 31.59 | - 8.38 % |
| Coke (wt%) | 25.74 | 21.59 | - 16 % |

The experimental data reported in Table-5 shows that with addition of 1 wt% of additive in the residual feed, height of coke bed in the reactor came down by 30 % compared to the base case experiment with residual feedstock. This indicates that around 30 % more volume of the reactor is available for feed processing, which can result in increasing the amount of feed processed in each cycle by approximately 30 volume %.

The associated benefits brought by using the additive also includes, reduction in coke yield by 16% compared to base case. It shows that the yield of hydrocarbon product boiling above 350°C is 8.38% lower compared to the coking process without the use of additive. The yield of hydrocarbon product boiling in the range of C₅ to 150°C is 33% higher compared to the coking process without the use of additive. The yield of LPG and Dry gas is 41 and 47% respectively higher compared to the coking process without the use of additive. This data indicates that the solid additive added to the coking process has facilitated the cracking of heavier hydrocarbon molecules boiling above 350°C into smaller molecules boiling in the range of C₅ to 150 °C and to gaseous hydrocarbon molecules.

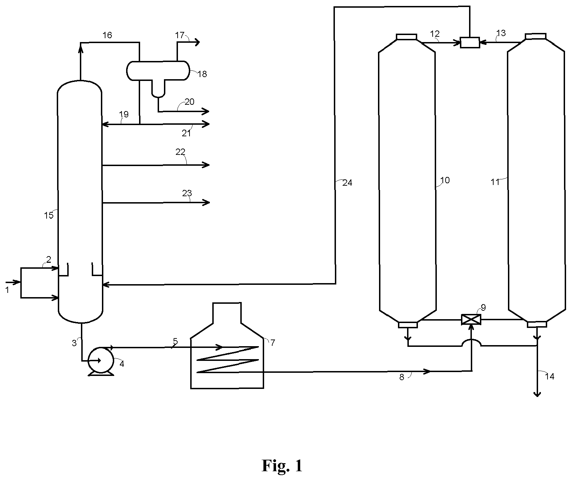

Figure 1 illustrates a schematic representation of a conventional delayed coking process.
The preheated residual hydrocarbon feedstock (1) is fed into the fractionator bottom (15), where it combines with the condensed recycle and pumped out from fractionator (3) bottom. This hydrocarbon feedstock (5) from fractionator bottom is pumped through a coker heater (7), where the desired coking temperature is achieved, causing partial vaporization and mild cracking. A vapor liquid mixture (8) exits the heater and a control valve (9) diverts it to a coking drum (10). Sufficient residence time is provided in the coking drum to allow thermal cracking till completion of coking reactions. The vapor liquid mixture is thermally cracked in the drum to produce lighter hydrocarbons (12), which vaporize and exit the coke drum. The drum vapor line temperature is the measured parameter used to represent the average drum outlet temperature. Quenching media (e.g. Gas oil or slop oil) is typically added to the vapor line (24) to quench vapors to avoid coke formation in the vapor line. When coke drum (10) is sufficiently full of coke, the coking cycle ends and the heater outlet charge is then switched from first drum (10) to a parallel coke drum (11) to initiate its coking cycle, while the filled drum (10) undergoes a series of steps like steaming, water cooling, coke cutting, vapor heating and draining, with the liquid (14) draining from the drums being fed to the blow down section. The cracked hydrocarbon vapors (24) are transferred to fractionator bottom, where they are separated and recovered. Coker heavy gas oil (HGO) (23) and Coker light gas oil (LGO) (22) are drawn off the fractionator at desired boiling temperature ranges. The fractionator overhead stream, wet gas (16) goes to separator (18), where it is separated into gaseous hydrocarbons (17), water (20) and unstabilized naphtha (21). A reflux fraction (19) is returned to the fractionator.

### Nano-sized additive Composition

### Example 3

Experiment was conducted in a 'Micro coker reactor unit' in which the hydrocarbon feedstock to be processed is loaded before the start of experiment. The reactor is heated into the desired reaction temperature using a predetermined heating rate using an electric furnace. The liquid products generated in the coking reaction are collected in the liquid collection vessel and the gaseous products are routed to vent.

Following experiments were carried out in the micro coker unit:
1. Vacuum residue feedstock
2. Vacuum residue feedstock with 1 wt% nano sized solid phase additive
3. Vacuum residue feedstock with 5000 ppm nano sized solid phase additive
4. Vacuum residue feedstock with 2500 ppm nano sized solid phase additive

Properties of feedstocks used in experiments useful for understanding the present invention are given in Table-3.

**Table 6: Experimental conditions in Micro coker reactor**

| **Parameter** | **unit** | **Value** |
|---|---|---|
| Reactor internal temperature (RIT) | °C | 486 |
| Reactor pressure | kg/cm² | 1.05 |
| Reaction time (after attaining RIT) | min | 120 |

Experiments were conducted in a 'Micro coker reactor unit' using the vacuum resid and nano sized solid phase Additive 'B' & results are provided in Table-7. Experimental conditions in Microcoker unit is as explained in the Example 1.

**Table-7: Results of experiments carried out in Micro Coker unit using Nano-sized Additive 'B'**

| **Experiment** | **Coke, wt%** | **Liquid yield, wt%** | **Gas yield, wt%** | **ΔCoke yield w.r.t. Base case, %** |
|---|---|---|---|---|
| VR without additive | 34.97 | 50.04 | 14.99 | 0 |
| VR + 1wt% nano size additive | 23.12 | 35.41 | 41.47 | -33.9 |
| VR + 5000 ppm nano size additive | 24.47 | 42.4 | 33.1 | -30 |
| VR + 2500 ppm nano size additive | 26.99 | 44.3 | 28.7 | -23 |
| VR + 100 ppm nano size additive | 34.1 | 49.4 | 16.5 | -2 |
| VR + 50 ppm nano size additive | 34.5 | 49.7 | 15.8 | -1 |

The experimental data reported in Table-7 shows that coke yield reduced by 33.9 % by using 1 wt% of nano additive with VR and also reflects high gas make compared to the base case indicating additive is actively participating in enhancing the cracking of heavy hydrocarbon molecules into lighter molecules.

## Claims

1. A process for preparation of an additive composition comprising 40-85 wt% alumina, 5-20 wt% colloidal silica having silica content ranging from 20-45 wt%, and 0.1-13 wt% phosphate compound, wherein said alumina comprises boehmite alumina and 2-40 wt% dispersible alumina,
the process comprising the steps of:
(a) treating boehmite alumina with demineralized water to obtain boehmite slurry;
(b) treating boehmite slurry with phosphate compound to obtain phosphate treated boehmite slurry;
(c) gelling dispersible alumina employing mineral or organic acid, wherein the dispersible alumina is selected from the group comprising pseudo boehmite, gamma-alumina, alpha alumina, and combination thereof;
(d) adding colloidal silica to product of step (c) at pH 1 to 5;
(e) adding the phosphate treated boehmite slurry to the product of step (d);
(f) spray drying the product obtained in step (e);
(g) calcining the spray dried particles of step (f) to obtain the additive composition.

2. The process as claimed in claim 1, wherein the mineral or organic acid is selected from nitric acid, formic acid, and acetic acid.

3. The process as claimed in claim 1, further comprising the step of milling the calcined additive composition to obtain nano-sized additive composition.

4. A process for reducing coke yield in Delayed Coking process comprising the steps of:
preparing an additive composition comprising 40-85 wt% alumina, 5-20 wt % colloidal silica having silica content ranging from 20-45 wt%, and 0.1-13 wt % phosphate compound wherein said alumina comprises boehmite alumina and 2-40 wt% dispersible alumina by
(a) treating boehmite alumina with demineralized water to obtain boehmite slurry;
(b) treating boehmite slurry with phosphate compound to obtain phosphate treated boehmite slurry;
(c) gelling dispersible alumina employing mineral or organic acid, wherein the dispersible alumina is selected from the group comprising pseudo boehmite, gamma-alumina, alpha alumina, and combination thereof;
(d) adding colloidal silica to product of step (c) at pH 1 to 5;
(e) adding the phosphate treated boehmite slurry to the product of step (d);
(f) spray drying the product obtained in step (e);
(g) calcining the spray dried particles of step (f) to obtain the additive composition,
(i) contacting a feedstock with said additive in a coke drum; and
(ii) separating the cracked product to obtain different fractions.

5. The process as claimed in claim 4, wherein the contacting of feedstock with the additive is carried out by:
(a) feeding a predetermined quantity of the additive to the coke drum before feeding the hydrocarbon feedstock into the coke drum;
(b) mixing the additive at a predetermined flow rate into the hydrocarbon feedstock before entering the feed heater furnace, in the transfer line;
(c) injecting the solid phase additive into the coke drum during the feeding of hydrocarbon into the drum, through injection nozzle(s) located at suitable part of the drum, preferably at the top section; or
(d) a combination of any of (a), (b) and (c).

6. The process as claimed in claim 4 wherein step (a) of the process is performed at a temperature range of 450-600°C.

7. The process as claimed in claim 4, wherein step (a) of the process is performed at a pressure range of 0.5-5 kg/cm².

8. The process as claimed in claim 4, wherein when micron-sized additive is used, the concentration of the additive is in the range of 0.01-5 wt% and when nano-sized additive is used, the concentration of additive is in the range of 50 ppm to 40,000 ppm.

9. The process as claimed in claim 4, wherein when the additive is micron sized, said additive is used in solid form or in a dispersion form.

10. The process as claimed in claim 4, wherein when the additive is nano-sized, the additive is used in dispersion form.

11. The process as claimed in claims 9 or 10, wherein the additive in dispersion form is used in combination with a liquid dispersion medium selected from the group consisting of feedstock, gas oil, lighter hydrocarbons, residue, solvents, water or mixtures thereof.

12. The process as claimed in claim 4, wherein the bottom product boiling above 350°C+ yield is reduced by 1-3 wt%.

13. The process as claimed in claim 4, wherein the LPG yield is increased by 1-2 wt%.

14. The process as claimed in claim 4, wherein the naphtha (C5-150°C) yield is increased by 1-2 wt%.

15. Use of the additive composition as obtained by the method claimed in claim 1 or 3 for reducing coke yield in Delayed coking process, wherein the reduction in coke yield is 1 wt% to 5 wt% with respect to base case.

## Patentansprüche

1. Verfahren zur Herstellung einer Additivzusammensetzung, die 40-85 Gew.-% Aluminiumoxid, 5-20 Gew.-% kolloidales Siliciumdioxid, das einen Siliciumdioxidgehalt im Bereich von 20-45 Gew.-% aufweist, und 0,1-13 Gew.-% Phosphatverbindung umfasst, wobei das Aluminiumoxid Böhmit-Aluminiumoxid und 2-40 Gew.-% dispergierbares Aluminiumoxid umfasst;
wobei das Verfahren die folgenden Schritte umfasst:
(a) Behandeln von Böhmit-Aluminiumoxid mit entmineralisiertem Wasser, um eine Böhmit-Aufschlämmung zu erhalten;
(b) Behandeln der Böhmit-Aufschlämmung mit Phosphatverbindung, um eine phosphatbehandelte Böhmit-Aufschlämmung zu erhalten;
(c) Gelieren von dispergierbarem Aluminiumoxid unter Einsatz von Mineral- oder organischer Säure, wobei das dispergierbare Aluminiumoxid aus der Gruppe umfassend Pseudoböhmit, gamma-Aluminiumoxid, alpha-Aluminiumoxid und eine Kombination davon ausgewählt ist;
(d) Zusetzen von kolloidalem Siliciumdioxid zu Produkt von Schritt (c) bei pH 1 bis 5;
(e) Zusetzen der phosphatbehandelten Böhmit-Aufschlämmung zu dem Produkt von Schritt (d);
(f) Sprühtrocknen des in Schritt (e) erhaltenen Produkts;
(g) Kalzinieren der sprühgetrockneten Teilchen von Schritt (f), um die Additivzusammensetzung zu erhalten.

2. Verfahren nach Anspruch 1, wobei die Mineral- oder organische Säure aus Salpetersäure, Ameisensäure und Essigsäure ausgewählt ist.

3. Verfahren nach Anspruch 1, ferner umfassend den Schritt des Mahlens der kalzinierten Additivzusammensetzung, um eine Additivzusammensetzung in Nanogröße zu erhalten.

4. Verfahren zum Reduzieren der Koksausbeute in einem verzögerten Verkokungsverfahren, umfassend die folgenden Schritte:
Herstellen einer Additivzusammensetzung, die 40-85 Gew.-% Aluminiumoxid, 5-20 Gew.-% kolloidales Siliciumdioxid, das einen Siliciumdioxidgehalt im Bereich von 20-45 Gew.-% aufweist, und 0,1 bis 13 Gew.-% Phosphatverbindung umfasst, wobei das Aluminiumoxid Böhmit-Aluminiumoxid und 2-40 Gew.-% dispergierbares Aluminiumoxid umfasst, durch
(a) Behandeln von Böhmit-Aluminiumoxid mit entmineralisiertem Wasser, um eine Böhmit-Aufschlämmung zu erhalten;
(b) Behandeln der Böhmit-Aufschlämmung mit Phosphatverbindung, um eine phosphatbehandelte Böhmit-Aufschlämmung zu erhalten;
(c) Gelieren von dispergierbarem Aluminiumoxid unter Einsatz von Mineral- oder organischer Säure, wobei das dispergierbare Aluminiumoxid aus der Gruppe umfassend Pseudoböhmit, gamma-Aluminiumoxid, alpha-Aluminiumoxid und eine Kombination davon ausgewählt ist;
(d) Zusetzen von kolloidalem Siliciumdioxid zu Produkt von Schritt (c) bei pH 1 bis 5;
(e) Zusetzen der phosphatbehandelten Böhmit-Aufschlämmung zu dem Produkt von Schritt (d);
(f) Sprühtrocknen des in Schritt (e) erhaltenen Produkts;
(g) Kalzinieren der sprühgetrockneten Teilchen von Schritt (f), um die Additivzusammensetzung zu erhalten,
(i) Inkontaktbringen eines Ausgangsmaterials mit dem Additiv in einer Kokstrommel; und
(ii) Auftrennen des Crack-Produkts, um verschiedene Fraktionen zu erhalten.

5. Verfahren nach Anspruch 4, wobei das Inkontaktbringen des Ausgangsmaterials mit dem Additiv durchgeführt wird durch:
(a) Zuführen einer vorbestimmten Menge des Additivs zu der Kokstrommel vor dem Zuführen des Kohlenwasserstoff-Ausgangsmaterials in die Kokstrommel;
(b) Mischen des Additivs mit einer vorbestimmten Durchflussrate in das Kohlenwasserstoff-Ausgangsmaterial in der Transferleitung vor dem Eintritt in den Zufuhrheizofen;
(c) Einspritzen des Festphasenadditivs in die Kokstrommel während der Zufuhr von Kohlenwasserstoff in die Trommel durch (eine) Einspritzdüse(n), die sich an einem geeigneten Teil der Trommel befindet/befinden, vorzugsweise im oberen Abschnitt; oder
(d) eine Kombination von beliebigen von (a), (b) und (c).

6. Verfahren nach Anspruch 4, wobei Schritt (a) des Verfahrens in einem Temperaturbereich von 450-600 °C durchgeführt wird.

7. Verfahren nach Anspruch 4, wobei Schritt (a) des Verfahrens in einem Druckbereich von 0,5-5 kg/cm² durchgeführt wird.

8. Verfahren nach Anspruch 4, wobei bei Verwendung eines Additivs in Mikrometergröße die Konzentration des Additivs im Bereich von 0,01-5 Gew.-% liegt und bei Verwendung eines Additivs in Nanogröße die Konzentration des Additivs im Bereich von 50 ppm bis 40.000 ppm liegt.

9. Verfahren nach Anspruch 4, wobei, wenn das Additiv eine Größe von Mikrometern hat, das Additiv in fester Form oder in Dispersionsform verwendet wird.

10. Verfahren nach Anspruch 4, wobei, wenn das Additiv eine Nanogröße hat, das Additiv in Dispersionsform verwendet wird.

11. Verfahren nach Anspruch 9 oder 10, wobei das Additiv in Dispersionsform in Kombination mit einem flüssigen Dispersionsmedium verwendet wird, das aus der Gruppe bestehend aus Ausgangsmaterial, Gasöl, leichteren Kohlenwasserstoffen, Rückständen, Lösungsmitteln, Wasser oder Gemischen davon ausgewählt ist.

12. Verfahren nach Anspruch 4, wobei die Ausbeute des Sumpfprodukts, das oberhalb von 350 °C siedet, um 1-3 Gew.-% reduziert wird.

13. Verfahren nach Anspruch 4, wobei die LPG-Ausbeute um 1-2 Gew.-% erhöht wird.

14. Verfahren nach Anspruch 4, wobei die Naphtha-Ausbeute (C5-150 °C) um 1-2 Gew.-% erhöht wird.

15. Verwendung der Additivzusammensetzung, wie sie durch das Verfahren nach Anspruch 1 oder 3 erhalten wird, zum Reduzieren der Koksausbeute in einem verzögerten Verkokungsverfahren, wobei die Reduzierung der Koksausbeute 1 Gew.-% bis 5 Gew.-% in Bezug auf den Basisfall beträgt.

## Revendications

1. Procédé de préparation d'une composition d'additif comprenant 40 à 85 % en poids d'alumine, 5 à 20 % en poids de silice colloïdale ayant une teneur en silice allant de 20 à 45 % en poids, et 0,1 à 13 % en poids d'un composé de phosphate, dans lequel ladite alumine comprend de l'alumine boéhmite et 2 à 40 % en poids d'alumine dispersible,
le procédé comprenant les étapes de :
(a) traitement d'alumine boéhmite avec de l'eau déminéralisée pour obtenir de la barbotine de boéhmite ;
(b) traitement de la barbotine de boéhmite avec un composé de phosphate pour obtenir de la barbotine de boéhmite traitée par phosphate ;
(c) gélification d'alumine dispersible en employant un acide minéral ou organique, dans lequel l'alumine dispersible est choisie dans le groupe comprenant la pseudo-boéhmite, la gamma-alumine, l'alpha alumine, et leurs combinaisons ;
(d) ajout de silice colloïdale au produit de l'étape (c) à un pH de 1 à 5 ;
(e) ajout de la barbotine de boéhmite traitée par phosphate au produit de l'étape (d) ;
(f) séchage par pulvérisation du produit obtenu à l'étape (e) ;
(g) calcination des particules séchées par pulvérisation de l'étape (f) pour obtenir la composition d'additif.

2. Procédé selon la revendication 1, dans lequel l'acide minéral ou organique est choisi parmi l'acide nitrique, l'acide formique, et l'acide acétique.

3. Procédé selon la revendication 1, comprenant en outre l'étape de broyage de la composition d'additif calcinée pour obtenir une composition d'additif de taille nanométrique.

4. Procédé pour la réduction du rendement en coke dans un procédé de cokéfaction retardée comprenant les étapes de :
préparation d'une composition d'additif comprenant 40 à 85 % en poids d'alumine, 5 à 20 % en poids de silice colloïdale ayant une teneur en silice allant de 20 à 45 % en poids, et 0,1 à 13 % en poids d'un composé de phosphate, dans lequel ladite alumine comprend de l'alumine boéhmite et 2 à 40 % en poids d'alumine dispersible par
(a) traitement d'alumine boéhmite avec de l'eau déminéralisée pour obtenir de la barbotine de boéhmite ;
(b) traitement de la barbotine de boéhmite avec un composé de phosphate pour obtenir de la barbotine de boéhmite traitée par phosphate ;
(c) gélification d'alumine dispersible en employant un acide minéral ou organique, dans lequel l'alumine dispersible est choisie dans le groupe comprenant la pseudo-boéhmite, la gamma-alumine, l'alpha alumine, et leurs combinaisons ;
(d) ajout de silice colloïdale au produit de l'étape (c) à un pH de 1 à 5 ;
(e) ajout de la barbotine de boéhmite traitée par phosphate au produit de l'étape (d) ;
(f) séchage par pulvérisation du produit obtenu à l'étape (e) ;
(g) calcination des particules séchées par pulvérisation de l'étape (f) pour obtenir la composition d'additif,
(i) mise en contact d'une charge d'alimentation avec ledit additif dans un tambour à coke ; et
(ii) séparation du produit craqué pour obtenir différentes fractions.

5. Procédé selon la revendication 4, dans lequel la mise en contact de la charge d'alimentation avec l'additif est réalisée par :
(a) alimentation du tambour à coke en une quantité prédéterminée de l'additif avant alimentation du tambour à coke en la charge d'alimentation hydrocarbonée ;
(b) mélange de l'additif à un débit prédéterminé dans la charge d'alimentation hydrocarbonée avant d'entrer dans le four de chauffe d'alimentation, dans la ligne de transfert ;
(c) injection de l'additif en phase solide dans le tambour à coke pendant l'alimentation du tambour en hydrocarbure, par une (des) buse(s) d'injection située(s) à une partie convenable du tambour, de préférence au niveau de la section haute ; ou
(d) une combinaison d'un quelconque parmi (a), (b) et (c).

6. Procédé selon la revendication 4, dans lequel l'étape (a) du procédé est réalisée dans une plage de température de 450 à 600 °C.

7. Procédé selon la revendication 4, dans lequel l'étape (a) du procédé est réalisée dans une plage de pression de 0,5 à 5 kg/cm².

8. Procédé selon la revendication 4, dans lequel lorsque l'additif de taille micrométrique est utilisé, la concentration de l'additif est dans la plage de 0,01 à 5 % en poids et lorsqu'un additif de taille nanométrique est utilisé, la concentration en additif est dans la plage de 50 ppm à 40 000 ppm.

9. Procédé selon la revendication 4, dans lequel lorsque l'additif est de taille micrométrique, ledit additif est utilisé sous forme solide ou sous forme de dispersion.

10. Procédé selon la revendication 4, dans lequel lorsque l'additif est de taille nanométrique, l'additif est utilisé sous forme de dispersion.

11. Procédé selon les revendications 9 ou 10, dans lequel l'additif sous forme de dispersion est utilisé en combinaison avec un milieu de dispersion liquide choisi dans le groupe consistant en une charge d'alimentation, un gazole, des hydrocarbures plus légers, un résidu, des solvants, de l'eau ou leurs mélanges.

12. Procédé selon la revendication 4, dans lequel le rendement en produit de fond bouillant au-delà de 350 °C+ est réduit de 1 à 3 % en poids.

13. Procédé selon la revendication 4, dans lequel le rendement en GPL est augmenté de 1 à 2 % en poids.

14. Procédé selon la revendication 4, dans lequel le rendement en naphta (C5-150 °C) est augmenté de 1 à 2 % en poids.

15. Utilisation de la composition d'additif telle qu'obtenue par le procédé revendiqué dans la revendication 1 ou 3 pour la réduction du rendement en coke dans un procédé de cokéfaction retardée, dans laquelle la réduction du rendement en coke est de 1 % en poids à 5 % en poids par rapport au cas de base.
